# EUROPEAN PATENT APPLICATION

(11) **EP 3 493 028 A1**
(43) Date of publication of application: **05.06.2019**
(21) Application number: 17306696.0
(22) Date of filing: 04.12.2017
(51) Int. Cl.: G06F 3/01, G06T 19/00

(54) **DEVICES, SYSTEMS AND METHODS FOR ENHANCING CONTENT VIEWER EXPERIENCE USING AUGMENTED REALITY**

(71) Applicant: THOMSON LICENSING, 92130 Issy les Moulineaux (FR)
(72) Inventor: EKAMBARAM, Gangatharan, 600114 Chennai (IN)
(74) Representative: Amor, Rim

(57) **Abstract**

Devices, systems and methods for enhancing content viewer experience using augmented reality (AR) to display subtitles and/or closed captioning to a viewer during playing of the content are provided. The present disclosure provides a display device (12, 112) wearable by a user/viewer (14) for displaying text (e.g., virtual text) to the viewer (14), a processing device (16) coupled to the display device (12, 112) that receives data and/or text related to content being displayed on a target object (18), e.g., a screen in a cinema theater, and processes the data and/or text for the display device (12, 112) and a sender/server (20) that transmits data and text to be displayed to the display device (12, 112). The present disclosure also provides for calibrating the caption or subtitle display to be in a location for convenient viewing and automatically maintaining the display in a convenient location as a viewer changes position and/or moves her/his head.

## Description

### TECHNICAL FIELD

The present disclosure generally relates to augmented reality (AR) content systems. More particularly, the present disclosure is related to devices, systems and methods for enhancing content viewer experience using augmented reality (AR) to display subtitles and/or closed captions to a viewer during the playing of the content.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Viewers going to a cinema theater to watch a movie (or watching content on any other device) of an unknown language or to another part of the globe where the language is not familiar would have difficulty understanding the movie. In such a case, it would be helpful for a viewer to watch the movie with subtitles of the language they are most familiar with. Currently, the only option is to display the subtitles on the movie itself. Display of the subtitles may be disturbing for viewers who understand the language and do not require the subtitles. To avoid this issue, some cinema theatres will advertise that a movie will be displayed with subtitles for only certain show times.

### SUMMARY

According to one aspect of the present disclosure, an apparatus is provided including at least one processor configured for: producing a signal representing a feature to be displayed on a first display device; receiving first information indicating a distance of the first display device from an object; and modifying the signal in response to the distance to adjust a size of the feature when displayed on the first display device.

According to another aspect, a wearable device is provided including a first display; and an interface receiving first information representing a feature for display and activating the display to display the feature; wherein a size of the feature when displayed on the display is based on a distance of the display from an object.

In a further aspect, a method is provided including producing a signal representing a feature to be displayed on a first display device; receiving first information indicating a distance of the first display device from an object; and adjusting a size of the feature when displayed on the first display device based on the distance.

In accordance with another aspect, an embodiment of apparatus in accordance with the present principles comprises at least one processor configured for: producing a signal representing a feature to be displayed on a first display device; receiving first information indicating a distance of the first display device from an object; and modifying the signal in response to the distance to adjust a size of the feature when displayed on the first display device.

In accordance with another aspect, an embodiment of apparatus as described herein including a display device may further comprise the display being included in a device wearable by a user; the object comprising a second display device at the distance from the wearable device and displaying content; the feature comprising a text string having a relationship to the content displaying on the second display device; and the size comprising a size of the text.

In accordance with another aspect, an embodiment of apparatus as described herein including one or more processors may further comprise the one or more processors being further configured for: receiving second information indicating an orientation of the feature with respect to the object; and modifying the signal to adjust a position of the feature with respect to the object when displayed on the first display device.

In accordance with another aspect, an embodiment of apparatus as described herein may further include a feature comprising at least one of a caption for the content and/or a subtitle for the content

In accordance with another aspect, an embodiment of apparatus as described herein may further include the second display device comprising a screen in a cinema theater.

In accordance with another aspect, an embodiment of apparatus as described herein may further include the one or more processors bieng further configured for receiving third information to control a synchronization of display of the feature on the first display device with respect to display of the content on the second display device.

In accordance with an aspect of the present principles, an exemplary embodiment of a wearable device comprises: a first display; and an interface receiving first information representing a feature for display and activating the first display to display the feature; wherein a size of the feature when displayed on the first display is based on a distance of the display from an object.

In accordance with another aspect, an embodiment of a wearable device as described herein may further include the object comprising a second display at the distance from the wearable device and displaying content; the feature comprises a text string having a relationship to the content displaying on the second display; and the size comprises a size of the text.

In accordance with another aspect, an embodiment of a wearable device as described herein may further comprise: the interface receiving second information indicating an orientation of the feature with respect to the object; and the interface activating the display to adjust a position of the feature with respect to the object when displayed on the first display.

In accordance with another aspect, an embodiment of a wearable device as described herein may further include the feature comprising at least one of a caption for the content and/or a subtitle for the content.

In accordance with another aspect, an embodiment of a wearable device as described herein may further include the second display comprising a screen in a cinema theater.

In accordance with another aspect, an embodiment of a wearable device as described herein may further include the interface receiving third information to control a synchronization of display of the feature on the first display with respect to display of the content on the second display.

In accordance with another aspect of the present principles, an exemplary embodiment of a method comprises: producing a signal representing a feature to be displayed on a first display device; receiving first information indicating a distance of the first display device from an object; and adjusting a size of the feature when displayed on the first display device based on the distance.

In accordance with another aspect, an embodiment of a method as described herein may further include the first display device comprising a display included in a device wearable by a user; the object comprising a second display device at the distance from the first display device and displaying content; the feature comprising a text string having a relationship to the content displaying on the second display device; and the size comprising a size of the text.

In accordance with another aspect, an embodiment of a method as described herein may further include following the adjusting: receiving second information indicating an orientation of the feature with respect to the object; and modifying a position of the feature with respect to the object when the feature is displayed on the first display device.

In accordance with another aspect, an embodiment of a method as described herein may further include the feature comprising at least one of a caption for the content and/or a subtitle for the content.

In accordance with another aspect, an embodiment of a method as described herein may further include the second display device comprising a screen in a cinema theater.

In accordance with another aspect, an embodiment of a method as described herein may further comprise receiving third information to control a synchronization of display of the feature on the first display device with respect to display of the content on the second display device.

In accordance with another aspect of the present principles, an exemplary embodiment comprises a non-transitory computer-readable medium storing computer-executable instructions executable to perform a method according to any of the embodiments described herein.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.
FIG. 1 illustrates an exemplary system for enhancing movie viewer experience using augmented reality (AR) in accordance with an embodiment of the present disclosure;
FIG. 2 is a block diagram of an exemplary system for enhancing movie viewer experience using augmented reality (AR) in accordance with an embodiment of the present disclosure;
FIG. 3 is a block diagram of an exemplary system for enhancing movie viewer experience using augmented reality (AR) in accordance with another embodiment of the present disclosure;
FIGS. 4A and 4B illustrate several views of a user interacting with an object in accordance with an embodiment of the present disclosure;
FIG. 5 is a flowchart illustrating an exemplary method for registering a wearable display device in accordance with an embodiment of the present disclosure;
FIG. 6 is a flowchart illustrating an exemplary method for manual calibration of a wearable display device in accordance with an embodiment of the present disclosure;
FIG. 7 is a flowchart illustrating an exemplary method for automatic calibration of a wearable display device in accordance with an embodiment of the present disclosure;
FIG. 8 is a flowchart illustrating an exemplary method for tracking an object in accordance with an embodiment of the present disclosure;
FIG. 9 is a flowchart illustrating an exemplary method for displaying a feature on a display device in accordance with an embodiment of the present disclosure; and
FIGS. 10A-10C illustrate several views of a user observing an object through a display device while varying a distance between the display device and the object in accordance with an embodiment of the present disclosure.

It should be understood that the drawing(s) are for purposes of illustrating the concepts of the disclosure and is not necessarily the only possible configuration for illustrating the disclosure.

### DESCRPTION OF EMBODIMENTS

It also should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure is directed to devices, systems and methods for enhancing content viewer experience using augmented reality (AR) to display subtitles and/or closed captions to a user/viewer during the playing of the content, e.g., a movie. Subtitling may be displayed only to the interested viewers using Augmented Reality (AR) technology. For example, an optically see-through augmented reality (OST AR) glasses, i.e. a viewer display device, may display the subtitles and/or closed captions over the movie only to the viewers wearing the glasses. The display device may be attached to a memory and processing device. The subtitles may be streamed to the display device with respect to the playing content or the subtitle files may be downloaded into the attached memory of the display device. Displaying of the subtitles may begin on receiving a beacon/command from a controller to start or stop the subtitle playback. The display device may also show a list of subtitle languages available, and the user can select the choice of language to display. Teachings of the present disclosure may also be used in the home environment, where anyone watching content (e.g., an event/movie) who does not understand the language of the playing content or wants to see subtitles for better understanding of the content may wear a display device such as OST AR glasses to see the subtitle overlay on the video/TV. Furthermore, providing the option of displaying closed captions of the audio in the same language of the movie being played may enhance the viewing experience for hearing impaired people.

Additionally, the present disclosure provides for calibrating the caption or subtitle display to be in a location for convenient viewing and automatically maintaining the display in a convenient location as a viewer changes position and/or moves her/his head.

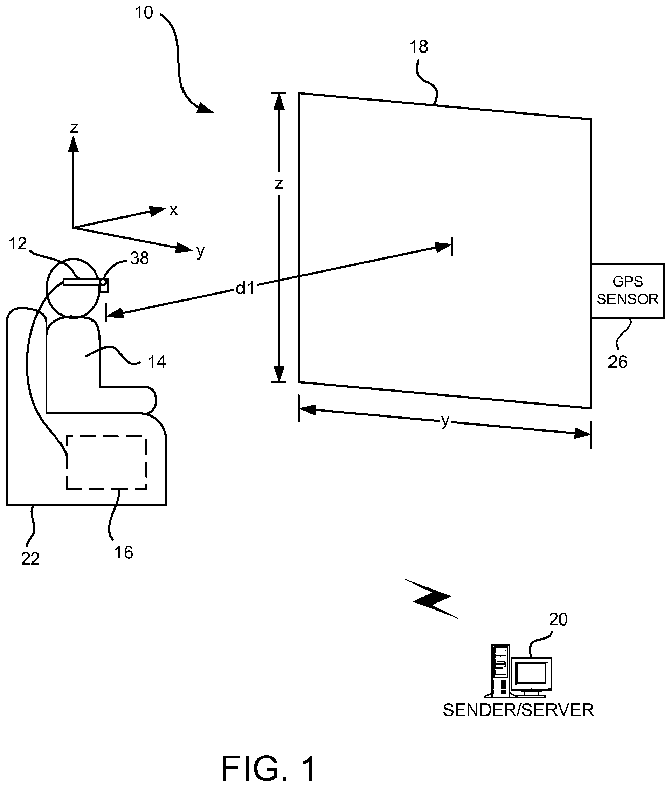

Referring to FIG. 1, a system 10 for enhancing content viewer experience using augmented reality (AR) to display subtitles and/or closed captions to a user/viewer during the playing of the content, e.g., a movie, is illustrated. The system 10 includes a display device 12 wearable by a user 14 for displaying text (e.g., virtual text) to the user 14, a processing device 16 coupled to the display device 12 that receives data and/or text related to content being displayed on a target object 18, e.g., a screen in a cinema theater, and processes the data and/or text for the display device 12 and a sender/server 20 that transmits data and text to be displayed to the display device 12. In one embodiment, the target object 18 may be the screen where video and/or a movie is shown. In other embodiments, the target object 18 may be a stage show where actors' dialogues may be displayed as subtitles on the display device 12 or the target object 18 may be a music show where Karaoke-like lyrics may be played on the display device 12. Virtual text that is displayed on display device 12 may include, but is not limited to, subtitles of the content, e.g., a movie, closed captioning, gestures as overlaid on top of a video screen for hearing-impaired people, etc.

The display device 12 may display the subtitles using Augmented Reality (AR) technology. In one embodiment, the display device 12 may be implemented as a head mounted device (HMD). The display device 12 may show the text related to the target object 18 while the viewer is viewing or looking at the object 18. The user may select the target object co-ordinates, e.g., the distance d1 between the display device 12 and the target object 18. On selecting the target object co-ordinates, the display device 12 may calibrate itself for the depth and area of the text to render the virtual text on the target object 18. The processing device 16 may be connected to the rear side of the display device 12 and disposed, for example, in a chair 22 where the viewer 14 is sitting during the presentation of the content or movie. In one embodiment, the processing device 16 may be disposed in an arm of the chair 22, where the armrest is openable to store the display device 12 in the arm of chair 22 when not in use. The reason for having a separate device for processing is to reduce the weight of the display device 12 and to avoid user exposure to more parts and/or components. Also increased weight may be a burden for a user when using the display device for a longer duration. As an example use case, a movie theater is more exposed to public of all ages and there is high chance of mishandling the device. Mishandling of the display device 12 which includes more components may have more damage, so the display device may be configured to be as simple as possible with all intelligence in peer processing device 16 which is wired to the display device 12. Further, it is advantageous to keep a device that receives or emits radio signals away from a user's head/body. Further, the display device 12 may prompt a user to select the language of interest to show the text, i.e., the subtitles, closed captions, etc., that is to be displayed on the target object.

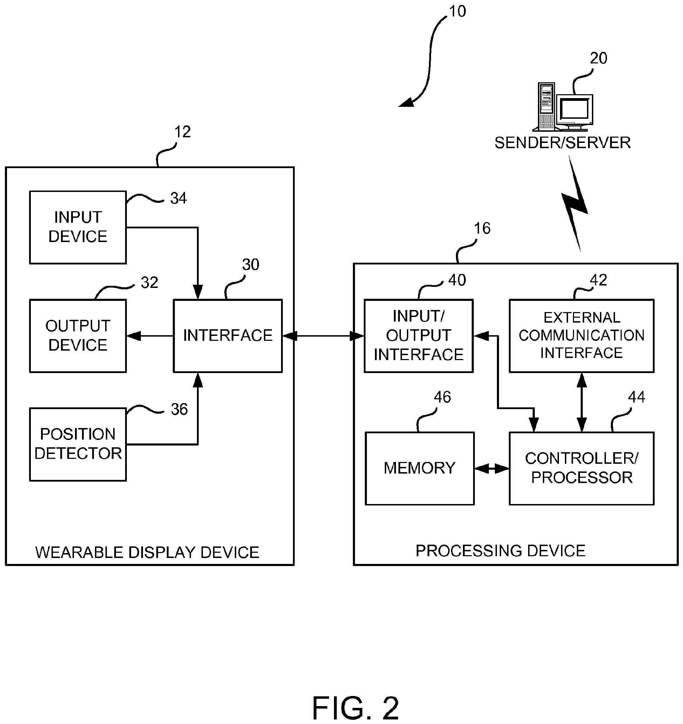

Referring to FIG. 2, a block diagram of an exemplary system for enhancing movie viewer experience using augmented reality (AR) in accordance with an embodiment of the present disclosure is illustrated. The display device 12 includes an interface 30 for interfacing with the processing device 30, an output device 32 that displays the text to a user, an input device 34 that receives at least one input from a user and a position detector 36 that detects position coordinates (e.g., x, y, z coordinates) of the display device 12 relative to the target object 18. In one embodiment, the output device 32 includes an optical see-through glass (e.g., configured as conventional eyeglasses with a lens or glass portion for each eye of the viewer, also known as a near-eye display) to project the virtual text to be displayed on the target object. It is to be appreciated that the optical see-through glass enables a user to see through the glass portion to view the target object as it actually appears in the real world and then projects or simulates virtual or augment text onto the glass portion so it appears to a user wearing the display device that the text is on or part of the targeted object. The display on the see-through glass can be monochromatic when there is no need to display color texts, e.g., it may be sufficient to display the subtitle in black and white. The input device 34 may include a button 38 disposed on the display device 12 to enable a viewer to, for example, make selections presented to the user via the output device 32, e.g., to select a language of choice of the viewer. Position detector 36 may include a gyroscope, accelerometer, etc. to detect the x, y, z coordinates of the display device 12 and to determine the direction, angle and/or field of view of the viewer. Additionally, the position detector 36 may include a GPS module to determine a location of the display device 12 in, for example, a cinema theater. In one embodiment, the interface 30 may be hardwired including, but not limited to, a serial connection, parallel connection, USB connection, FireWire, Ethernet connection, etc. In other embodiments, the interface 30 may be wireless.

It is to be appreciated that, in one embodiment, the x, y, and z coordinates values may be different for each individual user and dependent on the user's location in relation to the object 18, e.g., a movie screen in a cinema theater. For example, referring to FIG. 1, the x coordinate may be indicative of a distance from the display device 12 to the object 18 (for example, a particular row of seats in a cinema theater), the y coordinate may be indicative of a position of the display device 12 along a length of the object 18 (for example, a particular seat in a row of seats) and the z coordinate may be indicative of a height of the display device 12 relative to floor of the cinema theater or a height along the object 18.

The processing device 16 includes an input/output interface 40 that outputs the text to be displayed to the display device 12 and receives viewer or user inputs from the display device 12. An external communication interface 42 receives data and/or text from the sender/server 20. Controller 44 is also connected to the external communications interface 42. External communications interface 42 may include an interface for connection to an Ethernet network and/or to wireless communications network. The Ethernet network and/or wireless network may be used for communication data, audio, and/or video signals and content to and from other devices connected to the Ethernet network and/or wireless network. The subtitle or text to be rendered on the target object may be received via the external communication interface 42 as any radio signal, for example, Bluetooth, Wi-Fi or the like. While playing out the movie on the screen, the subtitle with supporting languages may be played out from a transmitter of the sender/server 20, e.g., an enhanced data server (EDS), via any of known medium such as Bluetooth, Wi-Fi etc., wherein the controller 44 of the processing device 16 receives the data from the transmitter (via the external communication interface 42) and processes the data to filter the language that the user selected and sends the filtered data to the display device 12.

It is to be appreciated that the controller 44 of the present disclosure may be implemented in hardware, software, firmware, or any combinations thereof. In some embodiments, the controller 44 may be implemented in software or firmware that is stored on a memory device (e.g., a memory device) and that is executable by a suitable instruction execution system (e.g., a processing device). In some embodiments, the controller 44 may be implemented in hardware using, for example, discrete logic circuitry, an application specific integrated circuit (ASIC), a programmable gate array (PGA), a field programmable gate array (FPGA), or any combinations thereof.

The processing device 16 further includes a memory 46. The memory 46 may contain several forms of memory including one or more large capacity integrated electronic memories, such as static random access memory (SRAM), dynamic RAM (DRAM), or hard storage media, such as a hard disk drive or an interchangeable optical disk storage system (e.g., compact disk drive or digital video disk drive). Memory block 46 may include a memory section for storage of instructions and data used by controller 44 as well as a memory section for audio and video signal storage.

The controller 44 of processing device 16 may send a request, via the external communication interface 42, to the sender/server 20 for authentication and, on successful authentication, the sender/server 20 may publish the data to the processing device 16 which is related to the target object's current scene. It is to be appreciated that memory 46 may store the entire text file relevant to the target object, in such case, processing device 16 may wait for acknowledgement from sender/server 20 to start the playback or the processing device 16 may start a timer on getting the acknowledgement from sender 20 to start the display in the display device 12.

The above embodiment has been described with an optical see-through display as incorporated into the display device 12. The teachings of the present disclosure may be applied to a video see-through display, where the target object is scanned by a camera in the display device and sent to the processing device. The processing device 16 may then merge the text plane and the video plane and send the merged planes back to the display device 12. In this manner, the user can watch the target object with the text with his/her understandable language. The subtitle data received from the server 20 to the processing device 16 may be similar in both the display types.

It is to be appreciated that the devices (e.g., the display device 12, processing device 16 and sender/server 20) may be configured to communicate with each other in a variety of ways. For example, in some embodiments, each of the devices may be configured to communicate via wireless and/or radio frequency communication, such as, but not limited to, Wi-Fi, Bluetooth, Transmission Control Protocol/Internet Protocol, Secure Shell, File Transfer Protocol, ZigBee, Z-Wave, Mobile Communication Protocols (e.g., 2G, 3G, 4G, LTE, etc.), NFC, Radio Frequency Identification (RFID), and any other protocols suitable to support the Internet of Things. Furthermore, each device may be configured to communicate via a power line using one or more narrowband and/or broadband power line communication protocols, such as, but not limited to, Universal Powerline Bus, X10, Ethernet Over Power (e.g., HomePlug AV, Powerline AV, etc.), and any other protocols suitable to support power line communication.

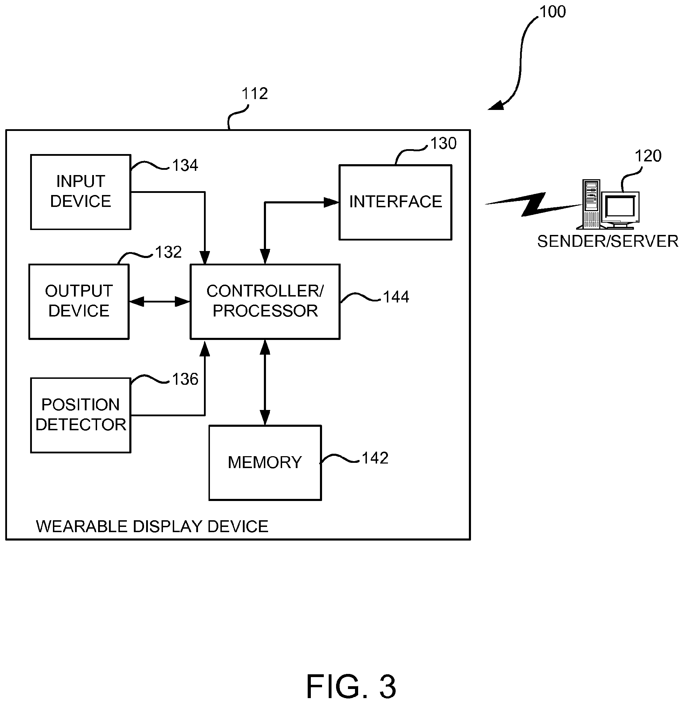

It is to be appreciated that the components of the processing device may be incorporated into the display device. Referring to FIG. 3, a system 100 for enhancing movie viewer experience using augmented reality (AR) to display subtitles and/or closed captioning to a user during the playing of a movie in accordance with another embodiment is illustrated. In system 100, the display device 112 includes input device 134, output device 132, position detector 136 and interface 130, as described above in relation to system 10. Here, display device 112 further includes controller 144 and memory 142. In this embodiment, there is no need for a separate processing device and the sender/server 120 may communicate directly to the interface 130 of the display device 112, e.g., via a wireless connection.

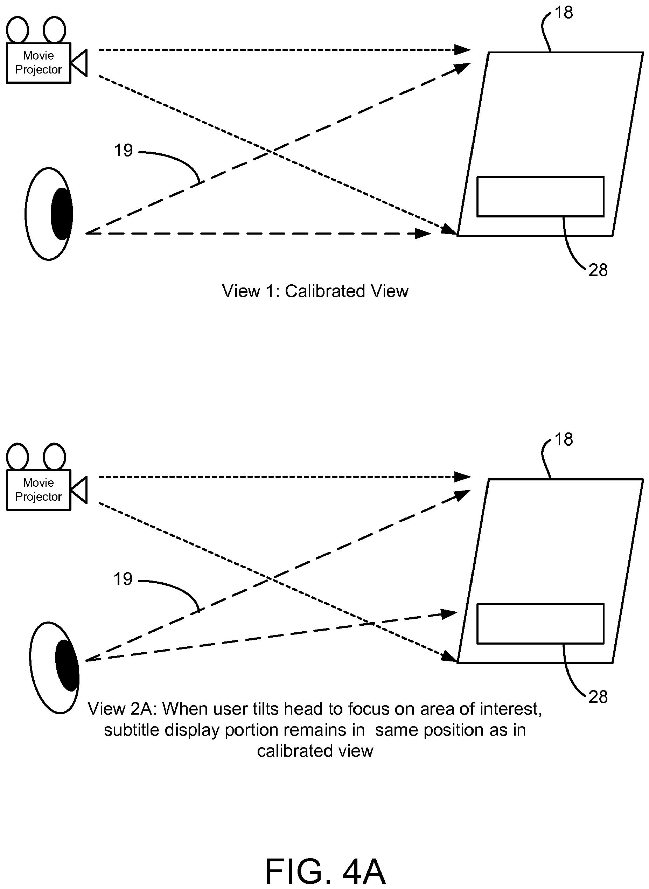

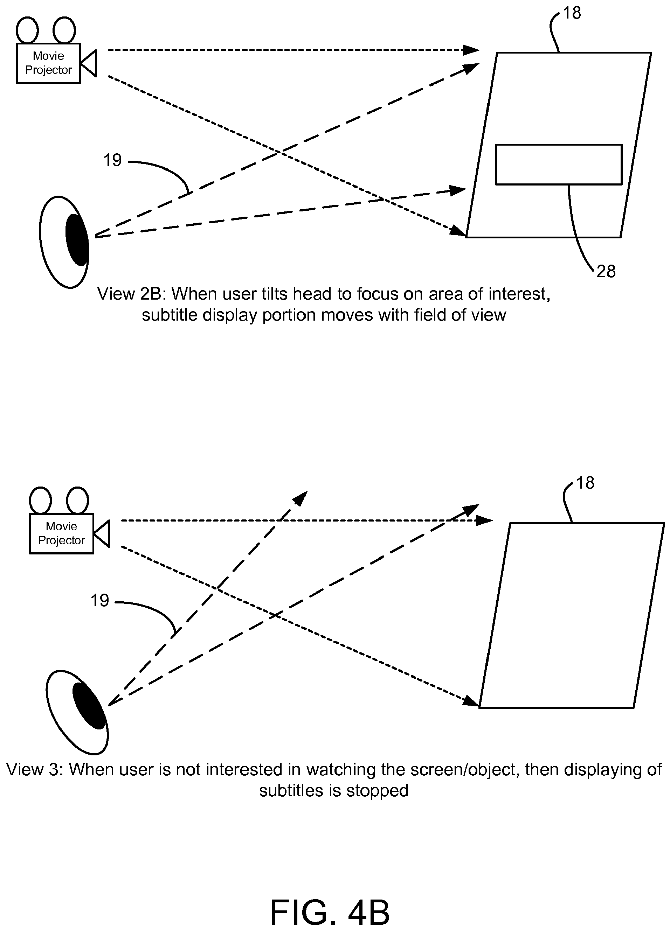

FIGS. 4A and 4B illustrate several views of a user or viewer that will be used to describe the various methods of the present disclosure, where view 1 illustrates a calibrated view, views 2A and 2B illustrate views when the viewer tilts their head to focus on an area of interest and view 3 illustrates when the viewer is not looking at the screen/object. It is to be appreciated that the object 18 shown in views 1, 2A, 2B and 3 are not the real world view of the object but the view of the object 18 while the viewer is looking through the display device, i.e., a view of the real world object with the augmented display portion 28 shown thereon.

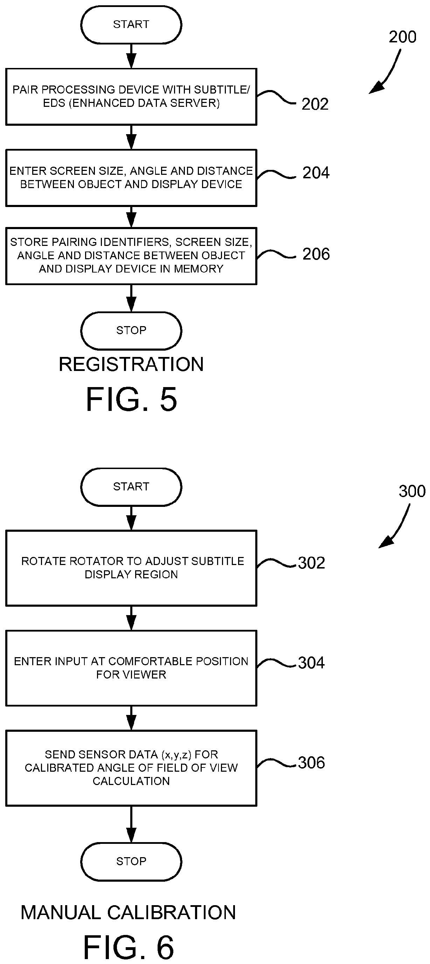

Referring to FIG. 5, a flowchart of an exemplary method 200 for registering a display device is shown in accordance with the present disclosure. It is to be appreciated that the method 200 may be used with any one of display devices 12, 112, described above. In step 202, the display device is paired with the enhanced data server (EDS) 20. This is one time pairing process, as the processing device 16 boots up it may send its identifier with its public key in a format as understandable by the software that runs in the server 20. This message may be encrypted with server's public key. On reception, the server 20 may decrypt the message with its private key and, on success, the server 20 may reply back with the processing device 16 public key's encrypted message. Then, the processing device 16 may decrypt the message by using its private key. Now, the processing device 16 is ready to receive messages from server 20 and server 20 acknowledged the processing device 16 to send the messages. Additionally, the server 20 may add the processing device's identifier into its local database; also, the processing device 16 may store the server's identifier into its memory 42 so that on next boot, the processing device 16 may not re-initiate the pairing process. It is to be appreciated that the above-described pairing method is an exemplary pairing method and other methods for pairing the processing device 16/display device 12 to the server 20 or to have a handshake between server 20 and processing device 16 are available and are contemplated to be within the scope of the present disclosure.

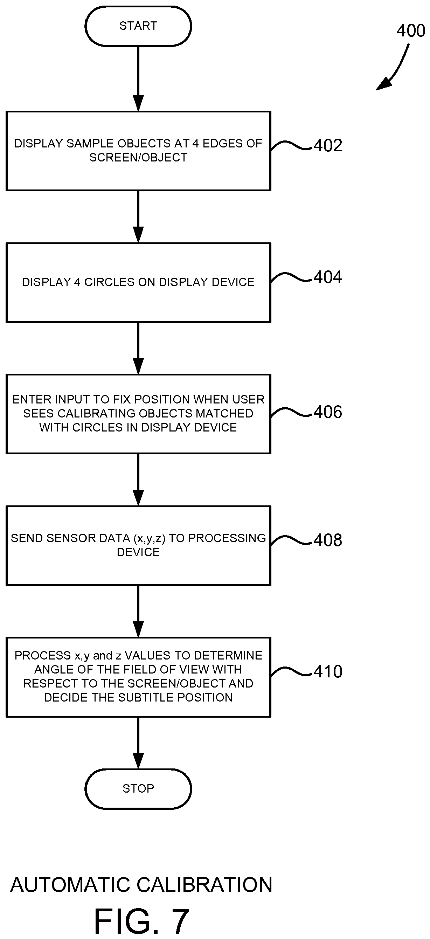

In step 204, the screen (i.e., object 18) size, angle between the screen 18 and display device 12 and distance between the screen 18 and display device 12 are entered in the processing device 16. These values may be entered, either manually or derived from sensors 26, 36, 136, as a one-time process to set as default values. After the default values are set, calibration may be performed for fine tuning as per each individual user's requirement. For example, the default angle from the particular position of the display device 12 to screen 18 may be entered as part of a one-time registration process, so when user wears the display device 12, the display device 12 would have settings of a partial calibration, where the fine tuning may be done as part of a calibration process by a particular viewer, as described below in relation to FIGS 6 and 7. At the end of an event/show, an administrator may trigger a reset settings via server 20, where the server 20 may send the trigger to the display devices 12 to reset the display device 12 to its default settings, which were made at the time of the one-time registration. In this manner, the next user to use display device 12 may recalibrate the display device 12 for their particular requirements.

The distance d1 between display device 12 and targeted object 18 may be manually entered into processing device 16 or server 20 may calculate the distance d1 between targeted object 18 and display device 12 and send the distance d1 to controller 44 of the processing device 16. In one embodiment, the distance calculation may also be automatic by having a first GPS sensor 26 at target object 18 and a second GPS sensor at display device 12, e.g., in position detector 36. The server 20 may then receive the two GPS positions from sensor 26 and position detector 36, determine the delta to arrive at distance d1 and send the distance d1 to the display device 12/processing device 16 during its pairing process. In another embodiment, the server 20 may send the latitude and longitude of the screen/object 18 to the processing device 16, where the processing device 16 may use these valves with values obtain from the position detector 36 of the display device 12 to determine the distance d1, eliminating the need for GPS sensor 26 at object 18. In the cinema theater example, the GPS sensor 26 may be eliminated, since the position of the screen/object 18 will be static.

Additionally, the server 20 may send the screen size to each display device 12/processing device 16 in a cinema theater as opposed to having to enter the screen size manually at each display device 12/processing device 16. Furthermore, the angle between the display device and object may be generally determined by, for example, seat location in the cinema theater or by position detector 36, 136.

Optionally, at step 206, the pairing identifiers, the screen size, angle between the display device 12 and object 18 and the distance d1 between the object 18 and display device 12 may be stored in memory 46 of the processing device 16 to be retrieved and employed in subsequent uses by a viewer.

Once the display device 12 is paired to the sender/server 20, the display device is to be calibrated. It is to be appreciated that the calibration process is to be performed for each user individually, as the person's height may differ settings in the same chair (e.g., in a public theater/auditorium). Calibration is the process of setting the augmented display's position 28 on the targeted object at right place, for example, as illustrated in view 1 of FIG. 4A, a field of view 19 of the display device 12 is centered in the target 18. User can be prompted for calibration with a mark on the display device, where a user can focus the mark at the outer edge of the targeted object, e.g., a screen. Calibration can be done manually (as in FIG. 6) or automatic (as in FIG. 7). It is to be appreciated that the methods of FIGS. 6 and 7 may be used with any one of display devices 12, 112, described above.

Referring to FIG. 6, in step 302, a user may adjust a rotor attached to either side of the display device 12, e.g., a HMD, to have the subtitles display at the area where the user prefers the subtitles to be placed on the screen, i.e., subtitle display region 28. Once the display region is located, the user may press the button 38 on the display device 12 to set the location, in step 304. In step 306, after the button is pressed, the display device 12 sends the sensor data (e.g., the x, y, z coordinates) to the controller 44 for calibrated angle of field of view calculations. In this manner, controller 44 may send the content of the subtitles to the display device 12 based on the co-ordinates. Basically, the controller 44 uses the sensor data to determine the data position on the output device 32, e.g., the screen or glass of the display device 12.

Referring to FIG. 7, a method 400 for automatic calibration is provided. In step 402, a sample object may be displayed at the four edges of the screen/object 18. In step 404, four circles are displayed to the viewer via the display device 12. In step 406, the user may be prompted to view the screen in the user's convenient sitting posture and focus on a target's calibrating object, where the viewer may then press the button when the calibrating object is matched with the circles. In step 408, the display device 12 sends the sensor data of x, y and z to the processing device 16, where the position of subtitle display region 28 will be calculated, in step 410. The processing device 16 may already hold the distance between processing device and screen/object 18, it may also know the screen size as part of one-time registration process described above.

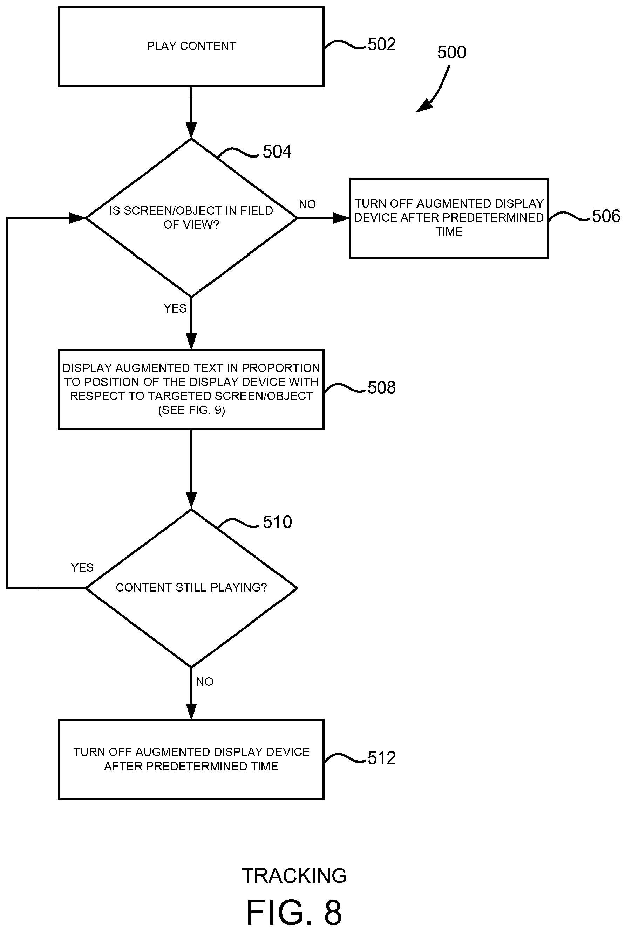

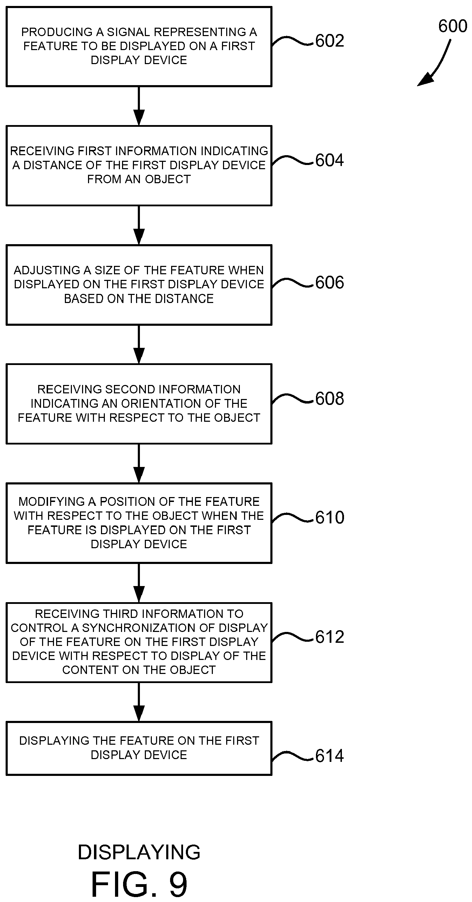

Referring to FIG. 8, a method 500 for tracking a user's view is provided. It is to be appreciated that the method 500 may be used with any one of display devices 12, 112, described above. Initially, in step 502, content, for example, a movie, is played on the object 18. In step 504, the controller 44 determines if the object 18, e.g., a movie screen, is in the field of view of the display device 12. If the screen 18 is in the field of view, in step 506, the controller 16 sends the text to be displayed in proportion to the display device's position with respect to the targeted object, as will be further described in relation to FIG. 9. It is to be appreciated that when user tilts their head to the left or right, the subtitle display should not tilt, and the subtitles should be static in proportion with the screen co-ordinates. The user's head tilt, or field of view, may be obtained by the sensor 36 (i.e., gyroscope/accelerometer) which sends the information to the processing device 16 where the new position of the subtitle rendering can be displayed in the display device 12 so that the user will see the subtitles at the same position. The processing device 16 may then identify the difference in the movement of x, y and z position of the display device 12 compared to the position of x, y and z at the time of calibration. In such scenario, the display device 12 may sense the user view of focus and move the x, y position of subtitle so that it does not moved with respect to the change in user's view, i.e., display device 12 may adjust the text display 28 so that it always appears at same point on the object 18 and as the same size, as illustrated in view 2A of FIG. 4A. In one embodiment, the text can be displayed with respect to the change angle (left, right, up and down) of calibration. For example, as illustrated in view 2B of FIG. 4B, when the user tilts their head to focus on an area of the object, the display portion 28 may move to remain in the field of view 19 of the user, i.e., the display portion 28 may move along the object 18 from its original position. The text display can be stopped with a small push button 38 on the frame of display device 12.

If the screen 18 is not in the field of view 19 of the viewer, in step 504, the controller 16 may turn off the augmented display after a predetermined period of time, in step 506. With the values of the sensor data (i.e. x, y and z), the processing device 16 may calculate whether the overlay text is to be rendered or not on the display device 12, e.g., when the user places the display device 12 on the chair 22. Furthermore, when user turns to some other direction for certain duration of time (e.g., 10 seconds), the field of view 19 of the display device 12 may not fall into the line of view of the screen/object 18 then the display may be turned off, as illustrated in view 3 of FIG. 4B.

In step 510, the display device 12 and/or processing device 16 may determine if the content is still playing. If the content is still playing at step 510, the method reverts to step 504 to determine if the screen/object 18 is in the viewer's field of view 19. If the content has stopped in step 510, the controller 16 may turn off the display device 12 and/or cease to send augmented text to the display device 12.

Referring to FIG. 9, a method 600 for displaying a feature on a display device is provided. It is to be appreciated that the method 600 may be used with any one of display devices 12, 112, described above. In step 602, the controller 44 of the processing device produces a signal representing a feature, e.g., text display portion or region 28, to be displayed on the output device or display 32 of display device 12. The feature may include, but is not limited to, a caption for the content, subtitles for the content, etc. Next, in step 604, the controller 44 receives first information indicating a distance of the display device 12 from an object 18, e.g., a screen in a cinema theater. It is to be appreciated that the first information indicating a distance may be pre-stored in, for example, the memory 46 of the processing device 16 during the registration process described above. In another embodiment, the registration process may be performed dynamically for each individual user for a specific performance. In other embodiments, the first information may include a size of the object 18, e.g., a screen size, and/or the angle between the field of view 19 of the display device 12 and the object 18.

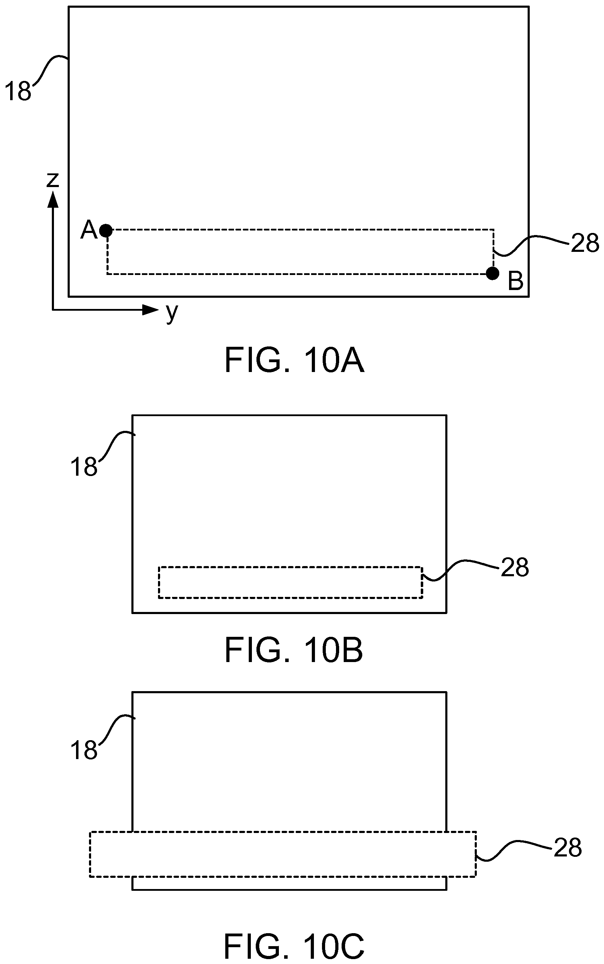

Based on the distance, in step 606, the controller 44 adjusts a size of the feature 28 when displayed on the first display device, e.g., a device wearable by a user such as a head mounted device. It is to be appreciated that the size of the feature 28 to be displayed is proportionate to the targeted object size, i.e., as the display device 12 moves farther from target object 18, the overlaid content (e.g., a subtitle) will be smaller to fit into the targeted object view (e.g., the screen). Referring to FIG. 10A, the object 18 as viewed through display device with overlaid portion 28 is shown with the user a first predetermined distance from the object 18. As the user moves further away from the object, the screen 18 and overlay portion 28 decrease in size in proportion to each other, as shown in FIG. 10B. It is to be appreciated that subtitle text region 28 should not be wider or larger than the object of screen or out of screen size, as shown in FIG. 10C, otherwise, the viewer may experience vision sickness or nausea from the constant focus shift between the overlaid text and the target object. As an example, assume the target object (e.g., the screen) size is 100 feet x 100 feet, and subtitle is displayed as size 32 points on the display device 12 in a position of a rectangle overlaid portion defined at A(30,10), B(10,90) in the z, y axes of the object, as shown in FIG. 10A. As the display device 12 moves farther away from the object 18, the size of the display portion 28 will change such that the display portion 28 fits into its original position in relation to the viewed object/screen. It is to be appreciated that the position of the feature is maintained irrespective of the display device's movement toward or away from the object/screen 18. As a default, the display device 12 may display the feature, e.g., subtitles, as per default settings, which may be entered during the one-time registration. Optionally, if a viewer wants to increase the subtitle size, then the viewer may adjust the feature size at the time of calibration. In one embodiment, the feature includes a text string having a relationship to the content displaying on the object, e.g. a second display, wherein the size comprises a size of the text. In this embodiment, the size of the text may vary in size with the size of the display portion 28 as the distance between the display device 12 and object 18 varies. For example, as the viewer moves away from the screen, the display portion 28 may decrease in proportion to the object and the text of the subtitles in the display portion 28 may also decrease. In another embodiment, as the viewer moves away from the screen, the display portion 28 may decrease in proportion to the object while the text of the subtitles in the display portion 28 remain the same size as when the display device was in its original position.

In step 608, the controller 44 receives second information from position detector 36 indicating an orientation of the feature with respect to the object and, step 610, modifies a position of the feature 28 with respect to the object 18 when the feature is displayed on the first display device 12.

Next, at 612, the controller 44 receives third information, e.g., from server 20, to control a synchronization of display of the feature 28 on the first display device 12 with respect to display of the content on the second display, e.g., object 18. In one embodiment, the server 20 may sync with the data that is projected on the screen 18, and based on the content projected on screen, the related additional information at that moment may be send to controller 44 of the processing device 16, i.e., so that the text of the subtitle or closed caption is in sync with the scene playing or words spoken in the playing content. In the case of a stage drama, manual intervention may require to send the notifications to server 20 about the event start and event end (assuming, the dialogues are well prepared and deliver at right time). At step 614, the modified signal is sent to the display device 12 and the feature 28 is displayed to the viewer via the output device 32. It is to be appreciated that method 600 will be executed continuously as part of step 508 in method 500.

It is to be appreciated that the display device may be configured as wearable device 12, 112 including a first display or output device 32, 132 and an interface 30, 130 for receiving first information representing a feature 28 for display and activating the first display 32, 132 to display the feature 28. In one embodiment, the interface 30, 130 receives the first information from the processing device 16, and, in another embodiment, the interface 30, 130 receives the first information from the server 120. The interface 30, 130 further receives second information indicating an orientation of the feature with respect to the object 18 from position detector 36, 136 and activates the display to adjust a position of the feature 28 with respect to the object when displayed on the first display 32, 132. Additionally, the interface 30, 130 receives third information to control a synchronization of display of the feature 28 on the first display or output device 32, 132 with respect to display of the content on the screen/object 18.

In one embodiment, a remote alarm may be attached to the processing device 16, which triggers an alarm when a user tries to tamper with the display device 12, e.g., by disconnecting/unplucking the display device 12 from processing device 16. An alarm may initiate to notify the tampering, where the processing device 16 may send the notification to the server 20 with the tamper details for the necessary action by owner of display device 12, e.g., the cinema theater operator or owner.

According to one aspect of the present disclosure, an apparatus is provided including at least one processor configured for: producing a signal representing a feature to be displayed on a first display device; receiving first information indicating a distance of the first display device from an object; and modifying the signal in response to the distance to adjust a size of the feature when displayed on the first display device.

In another aspect, the first display device includes a display included in a device wearable by a user; the object includes a second display device at the distance from the wearable device and displaying content; the feature includes a text string having a relationship to the content displaying on the second display device; and the size includes a size of the text.

In a further aspect, the one or more processors are further configured for: receiving second information indicating an orientation of the feature with respect to the object; and modifying the signal to adjust a position of the feature with respect to the object when displayed on the first display device.

In another aspect, the feature includes at least one of a caption for the content and/or a subtitle for the content.

In yet another aspect, the second display device includes a screen in a cinema theater.

In another aspect, the one or more processors are further configured for receiving third information to control a synchronization of display of the feature on the first display device with respect to display of the content on the second display device.

According to another aspect of the present disclosure, a wearable device includes a first display; and an interface receiving first information representing a feature for display and activating the first display to display the feature; wherein a size of the feature when displayed on the first display is based on a distance of the display from an object.

In another aspect, the object includes a second display at the distance from the wearable device and displaying content; the feature includes a text string having a relationship to the content displaying on the second display; and the size includes a size of the text.

In a further aspect, the interface of the wearable device receives second information indicating an orientation of the feature with respect to the object; and the interface activates the display to adjust a position of the feature with respect to the object when displayed on the first display.

In yet a further aspect, the feature includes at least one of a caption for the content and/or a subtitle for the content.

In another aspect, the second display includes a screen in a cinema theater.

In still a further aspect, the interface of the wearable device receives third information to control a synchronization of display of the feature on the first display with respect to display of the content on the second display.

According to a further aspect of the present disclosure, a method is provided including producing a signal representing a feature to be displayed on a first display device; receiving first information indicating a distance of the first display device from an object; and adjusting a size of the feature when displayed on the first display device based on the distance.

In another aspect, the first display device includes a display included in a device wearable by a user; the object includes a second display device at the distance from the first display device and displaying content; the feature includes a text string having a relationship to the content displaying on the second display device; and the size includes a size of the text.

In a further aspect, the method further includes following the adjusting: receiving second information indicating an orientation of the feature with respect to the object; and modifying a position of the feature with respect to the object when the feature is displayed on the first display device.

In another aspect of the method, the feature includes at least one of a caption for the content and/or a subtitle for the content.

In yet another aspect of the method, the second display device includes a screen in a cinema theater.

In still another aspect, the method further includes receiving third information to control a synchronization of display of the feature on the first display device with respect to display of the content on the second display device.

According to another aspect of the present disclosure, a non-transitory computer-readable medium storing computer-executable instructions executable to perform any of the methods described herein is provided.

It is to be appreciated that the various features shown and described are interchangeable, that is a feature shown in one embodiment may be incorporated into another embodiment.

Although embodiments which incorporate the teachings of the present disclosure have been shown and described in detail herein, those skilled in the art can readily devise many other varied embodiments that still incorporate these teachings. Having described embodiments of devices, systems and methods for enhancing movie viewer experience using augmented reality (AR) to display subtitles and/or closed captioning to a user during the playing of a movie, it is noted that modifications and variations can be made by persons skilled in the art in light of the above teachings. It is therefore to be understood that changes may be made in the particular embodiments of the disclosure disclosed which are within the scope of the disclosure as outlined by the appended claims.

## Claims

1. Apparatus (16) comprising at least one processor (44) configured for:
producing a signal representing a feature (28) to be displayed on a first display device (12);
receiving first information indicating a distance of the first display device (12) from an object (18); and
modifying the signal in response to the distance to adjust a size of the feature (28) when displayed on the first display device (12).

2. A wearable device (12, 112) comprising:
a first display (32, 132); and
an interface (30, 130) receiving first information representing a feature (28) for display and activating the first display (32, 132) to display the feature (28); wherein
a size of the feature (28) when displayed on the first display (12, 112) is based on a distance of the display from an object (18).

3. The apparatus (16) of claim 1, wherein the first display device (12) comprises a display included in a device wearable by a user, or the wearable device (12, 112) of claim 2, wherein:
the object (18) comprises a second display device at the distance from the wearable device and displaying content;
the feature (28) comprises a text string having a relationship to the content displaying on the second display device; and
the size comprises a size of the text.

4. The apparatus (16) or the wearable device (12, 112) of claim 3, wherein the one or more processors (44) of the apparatus or the interface of the wearable device are further configured for:
receiving second information indicating an orientation of the feature (28) with respect to the object (18); and
modifying the signal to adjust a position of the feature (28) with respect to the object (18) when displayed on the first display device (12).

5. The apparatus (16) or the wearable device (12, 112) of any of the preceding claims, wherein the feature (28) comprises at least one of a caption for the content and/or a subtitle for the content.

6. The apparatus (16) or the wearable device (12, 112) of any of the preceding claims, wherein the second display device comprises a screen in a cinema theater.

7. The apparatus (16) of any of claims 1 or 3 - 6 or the wearable device (12, 112) of any of claims 2 - 6, wherein the one or more processors (44) of the apparatus or the interface of the wearable device are configured for receiving third information to control a synchronization of display of the feature (28) on the first display device (12) with respect to display of the content on the second display device.

8. A method (600) comprising:
producing (602) a signal representing a feature (28) to be displayed on a first display device (12, 112);
receiving (604) first information indicating a distance of the first display device (12, 112) from an object (18); and
adjusting (606) a size of the feature (28) when displayed on the first display device (12, 112) based on the distance.

9. A method comprising:
receiving, in a wearable device, first information representing a feature (28) for display; and
activating a first display (32, 132) included in the wearable device to display the feature (28); wherein a size of the feature (28) when displayed on the first display (12, 112) is based on a distance of the first display from an object (18).

10. The method (600) of claim 8, wherein the first display device (12, 112) comprises a display included in a device wearable by a user, or the method of claim 9, wherein:
the object (18) comprises a second display device at the distance from the first display device (12, 112) and displaying content;
the feature (28) comprises a text string having a relationship to the content displaying on the second display device; and
the size comprises a size of the text.

11. The method (600) of any of claims 8 to 10, further comprising:
receiving (608) second information indicating an orientation of the feature with respect to the object (18); and
modifying (610) a position of the feature (28) with respect to the object (18) when the feature is displayed on the first display device (12, 112).

12. The method (600) of any of claims 8 to 11, wherein the feature (28) comprises at least one of a caption for the content and/or a subtitle for the content.

13. The method (600) of any of claims 8 to 11, wherein the second display device comprises a screen in a cinema theater.

14. The method (600) of any of claims 10 to 13, further comprising receiving (612) third information to control a synchronization of display of the feature (28) on the first display device (12, 112) with respect to display of the content on the second display device.

15. A non-transitory computer-readable medium storing computer-executable instructions executable to perform a method (600) according to any of claims 8 through 14.
